# FASCICULE DE BREVET EUROPEEN

(11) **EP 2 315 722 B1**
(45) Date de publication et mention de la délivrance du brevet: **05.02.2020**
(21) Numéro de dépôt: 09740398.4
(22) Date de dépôt: 28.07.2009
(51) Int. Cl.: C01G 49/00, C01G 49/02, C01G 51/00, C01G 53/00, C09C 1/42, C01F 7/00, H01M 4/52, H01G 11/86, H01M 10/36, H01G 11/30, H01G 11/48, H01G 11/50

(54) **UTILISATION D'UN OXYHYDROXYSEL APPARENTE A LA FAMILLE DES HYDROXYDES DOUBLES LAMELLAIRES POUR LA CONCEPTION ET FABRICATION D'UNE ELECTRODE EN VUE DU STOCKAGE D'ENERGIE ELECTRIQUE**
VERWENDUNG EINES OXIDHYDROXIDSALZES AUS DER FAMILIE DER SCHICHTFÖRMIGEN DOPPELHYDROXIDE ZUM DESIGN UND ZUR HERSTELLUNG EINER ELEKTRODE IM HINBLICK AUF DIE SPEICHERUNG ELEKTRISCHER ENERGIE
USE OF AN OXYHYDROXY SALT RELATED TO THE FAMILY OF LAMELLAR DOUBLE HYDROXIDES FOR THE DESIGN AND MANUFACTURE OF AN ELECTRODE IN VIEW OF STORING ELECTRICAL ENERGY

(30) Priorité: 29.07.2008 FR 0804325
(43) Date de publication de la demande: 04.05.2011
(73) Titulaire: Université de Lorraine, 54052 Nancy Cedex (FR)
(72) Inventeur: GENIN, Jean-Marie, F-54290 Neuviller sur Moselle (FR); RUBY, Christian, F-54510 Tomblaine (FR)
(74) Mandataire: Grosset-Fournier, Chantal Catherine
(86) Numéro de dépôt international: PCT/FR2009/051514
(87) Numéro de publication internationale: WO 2010/012951

(56) Documents cités:
- EP-A2- 1 903 628
- JP-A- 2005 183 032
- US-A- 4 118 294
- BOUSSELMI L ET AL: "Impedance spectroscopic study of a steel electrode in condition of scaling and corrosion - Interphase model" ELECTROCHIMICA ACTA, ELSEVIER SCIENCE PUBLISHERS, BARKING, GB, vol. 44, no. 24, 31 juillet 1999 (1999-07-31), pages 4357-4363, XP004173514 ISSN: 0013-4686
- GENIN J M R ET AL: "Fougerite and Fe<II-III> hydroxycarbonate green rust; ordering, deprotonation and/or cation substitution; structure of hydrotalcite-like compounds and mythic ferrosic hydroxide Fe(OH)(2+x)" SOLID STATE SCIENCES, ELSEVIER, PARIS, FR, vol. 7, no. 5, 1 mai 2005 (2005-05-01), pages 545-572, XP025368639 ISSN: 1293-2558 [extrait le 2005-05-01]
- RUBY CHRISTIAN ET AL: "In situ redox flexibility of Fe<II-III> oxyhydroxycarbonate green rust and fougerite" ENVIRONMENTAL SCIENCE AND TECHNOLOGY, AMERICAN CHEMICAL SOCIETY. EASTON, PA, US, vol. 40, no. 15, 1 août 2006 (2006-08-01), pages 4696-4702, XP002454437 ISSN: 0013-936X
- BENOIT C ET AL: "Chemistry and electrochemistry of nanostructured iron oxyhydroxides as lithium intercalation compounds for energy storage" JOURNAL OF PHYSICS AND CHEMISTRY OF SOLIDS, PERGAMON PRESS, LONDON, GB LNKD- DOI:10.1016/J.JPCS.2006.01.057, vol. 67, no. 5-6, 1 mai 2006 (2006-05-01), pages 1265-1269, XP025189308 ISSN: 0022-3697 [extrait le 2006-05-01]
- HANG B T ET AL: "The electrochemical properties of Fe2O3-loaded carbon electrodes for iron-air battery anodes" JOURNAL OF POWER SOURCES, ELSEVIER SA, CH LNKD- DOI:10.1016/J.JPOWSOUR.2005.02.028, vol. 150, 4 octobre 2005 (2005-10-04), pages 261-271, XP025269172 ISSN: 0378-7753 [extrait le 2005-10-04]

## Description

La présente invention concerne l'utilisation d'un oxyhydroxysel apparenté à la famille des hydroxydes doubles lamellaires pour la conception et fabrication d'une électrode en vue du stockage de l'énergie électrique.

Les oxyhydroxysels ferreux ferriques sont des composés intermédiaires, apparentés à la famille des hydroxydes doubles lamellaires, qui apparaissent au cours de la dégradation des matériaux ferreux (les aciers) en se transformant ultimement en rouille et portent ainsi couramment le nom de rouilles vertes en raison de leur couleur (Génin et al., Geoscience 2006).

Par exemple, Ona Nguema et al., 2002, Enviro. Sci. Technol., ont décrit la formation de rouilles vertes par les bactéries ferri-réductrices dissimilatrices *Shewanella putrefaciens* en présence de méthanoate (HCO₂⁻) comme donneur d'électrons et de lépidocrocite, l'oxyhydroxyde ferrique γ-FeOOH, comme accepteur d'électrons, source de fer. L'activité bactérienne consiste alors à réduire les ions Fe^{III} en Fe^{II} tout en oxydant la matière organique en carbonate CO₃²⁻, ce qui permet alors à la rouille verte dite carbonatée de se former. Ce produit est donc un produit naturel que l'on trouve en particulier dans les sols inondés, les gleys, sous le nom de fougérite (citer Génin et al. Geochim. Cosmochim. Acta 1998). Bousselmi et al., Electrochimica Acta, 1999, 44(24), p.4357, décrit la formation d'une rouille verte à la surface d'une électrode de carbone/acier, exposée à une eau riche en sels. Ladite rouille verte est sous forme d'hydroxysulfate Fe(II)-Fe(III).
Génin et al., Solid State Sciences, 2005, 7(5), p.545, décrit une réaction d'oxydo-réduction en présence d'eau oxygénée, d'une rouille verte identifiée comme étant un hydroxycarbonate Fe(II)-Fe(III).

Par ailleurs, les dispositifs de stockage d'énergie électrique tels que piles, batteries ou accumulateurs, abritent une réaction chimique entre deux substances dont l'une peut céder facilement des électrons (le réducteur), et l'autre les accepter (l'oxydant). Une telle réaction est appelée une oxydo-réduction.

Chaque élément du couple oxydant/réducteur constitue une électrode. Ces électrodes, lorsqu'elles sont reliées à un dispositif de consommation électrique, provoquent la circulation d'un courant; la réaction chimique produit donc de son côté une circulation de charges (électrons, ions).

Récemment, l'intérêt pour les dispositifs de stockage d'énergie s'est considérablement accru en raison des problèmes liés à la nécessité de réduire les émissions de gaz à effet de serre (notamment de CO₂) et de rechercher par conséquent des moyens de production d'énergie et d'utilisation moins polluants, sans oublier la limitation des réserves en énergies fossiles (pétrole, gaz naturel, charbon) et des incertitudes liées à leur approvisionnement.

Cependant, les piles, batteries ou accumulateurs actuels présentent des inconvénients en termes de performance énergétique souvent dus à leur poids voire leur encombrement sans oublier les problèmes environnementaux, notamment liés aux déchets polluants qui nécessitent des précautions lors du recyclage.

L'un des objets de l'invention est donc de disposer d'un matériau pour la fabrication d'une électrode en vue de mettre en œuvre des dispositifs de stockage d'énergie tels que des piles électriques, des batteries, des accumulateurs ou des supercapacités ayant des performances énergétiques largement supérieures aux piles, batteries, accumulateurs ou supercapacités actuellement commercialisés, tout en ayant un coût de production très inférieur aux matériaux existants et pouvant être éliminé sans aucun effet néfaste pour l'environnement.

Un autre aspect de l'invention est d'élaborer ces matériaux actifs à la composition bien établie en fournissant un procédé de fabrication soit sous forme de film ou de matériau composite mélangés à du carbone (graphite) permettant ainsi la fabrication des dispositifs de stockage d'énergie.

La présente description décrit l'utilisation d'un matériau comprenant au moins un composé apparenté à un hydroxyde double lamellaire (HDL) ferreux ferrique, ledit composé comportant au moins un cation divalent D^{II}, et au moins un cation trivalent T^{III}, de formule générale suivante :

[D^{II}₃ₙ₍₁₋ₓ₎T^{III}₃ₙₓO₆ₙHₙ₍₇₋₃ₓ₎]ⁿ⁺[Aⁿ⁻, m H₂O]ⁿ⁻ (I)

dans laquelle Aⁿ⁻ est un anion de charge n, n prenant les valeurs 1, 2 ou 3, notamment 2, m est un nombre entier variant de 1 à 10, notamment de 1 à 4, avantageusement 3,
et x est compris de 0 à 1,
pour la mise en oeuvre d'une électrode.
La présente invention concerne l'utilisation d'un matériau comprenant au moins un composé apparenté à un hydroxyde double lamellaire (HDL) ferreux ferrique, ledit composé comportant au moins un cation divalent D^{II}, et au moins un cation trivalent T^{III}, de formule générale suivante :

[D^{II}₃ₙ₍₁₋ₓ₎T^{III}₃ₙₓO₆ₙHₙ₍₇₋₃ₓ₎]ⁿ⁺[Aⁿ⁻, m H₂O]ⁿ⁻ (I)

dans laquelle Aⁿ⁻ est un anion de charge n, n prenant les valeurs 1, 2 ou 3, notamment 2, m est un nombre entier variant de 1 à 10, notamment de 1 à 4, avantageusement 3,
et x est compris de 0 à 1,
ledit composé comprenant une proportion minimale de Fe^{II} de 1% permettant la transformation d'un ion Fe^{II} en ion Fe^{III},
pour la mise en oeuvre d'une électrode dans des dispositifs de stockage d'énergie tels que des piles électriques, des batteries, des accumulateurs ou des supercapacités, la capacité théorique d'énergie électrique de ladite électrode est supérieure ou égale à 160 Ah/kg, en particulier 245 Ah/kg.

L'expression « au moins un cation divalent D^{II} » signifie que le cation D^{II} est utilisé seul ou en association avec un autre.

L'expression « au moins un cation trivalent T^{III} » signifie que le cation T^{III} est utilisé seul ou en association avec un autre.

Le composé apparenté à l'HDL nécessite pour fonctionner la présence d'une proportion minimale de Fe^{II} de 1% permettant la transformation d'un ion Fe^{II} en ion Fe^{III}. Si le composé apparenté à l'HDL ne comporte pas de Fe^{II}, celui-ci est alors non fonctionnel.

L'invention a plus particulièrement pour objet l'utilisation d'un composé tel que défini ci-dessus, dans lequel la proportion de Fe^{III} dans l'élément trivalent est comprise de 0 % (m/m) à 100% (m/m) par rapport à la quantité totale d'élément trivalent.

La présence de Fe^{III} n'est pas indispensable à partir du moment où du Fe^{II} susceptible de se transformer en Fe^{III} est présent dans le composé.

L'invention a également pour objet l'utilisation d'un composé apparenté à l'HDL tel que défini ci-dessus, dans laquelle D^{II} est choisi parmi Mg^{II}, Ni^{II}, Ca^{II}, Mn^{II}, Co^{II} et Fe^{II}, et T^{III} est choisi parmi Al^{III}, Co^{III}, Cr^{III} et Fe^{III}.

La présente invention concerne l'utilisation telle que définie ci-dessus, d'un matériau comprenant au moins un oxyhydroxysel ferreux ferrique de formule générale (II) suivante :

[Fe^{II}₃ₙ₍₁₋ₓ₎Fe^{III}₃ₙₓO₆ₙHₙ₍₇₋₃ₓ₎]ⁿ⁺[Aⁿ⁻, m H₂O]ⁿ⁻ (II)

dans laquelle Aⁿ⁻ est un anion de charge n, n prenant les valeurs 1, 2 ou 3, notamment 2, m est un nombre entier variant de 1 à 10, notamment de 1 à 4, avantageusement 3, et x est compris de 0 à 1,
lequel oxyhydroxysel ferreux ferrique peut être modifié de façon partielle par la substitution partielle ou totale d'au moins un de ses éléments pour la mise en oeuvre d'une électrode non polluante.

Les hydroxysels ferreux ferriques appartiennent à la famille des hydroxydes doubles lamellaires qui comportent des feuillets cationiques comprenant les ions Fe^{II} et Fe^{III} de structure Fe(OH)₂, dits brucitiques, et des interfeuillets comprenant anions et molécules d'eau qui contrebalancent l'excès de charges positives dû aux ions Fe^{III}.

Les oxyhydroxysels ferreux ferriques ont, quant à eux, une structure cristallographique pratiquement similaire à celle des hydroxysels afférents, mais certains de leurs ions OH⁻ qui entourent chaque cation Fe^{III} sont déprotonnés en devenant des ions O²⁻ ou, au contraire, protonnés en devenant des molécules d'eau. Des ions Fe^{II} s'oxydent en Fe^{III} pour compenser la charge et vice versa.

Les oxyhydroxysels ferreux ferriques utilisés dans le cadre de l'invention peuvent être d'origine naturelle ou de synthèse, cette dernière hypothèse étant favorisée.

Les oxyhydroxysels ferreux ferriques sont observés à l'état naturel dans les sols mais ne sont présents que dans un domaine de x= [Fe^{III}] / [Feₜₒₜₐₗ] compris de 0,33 à 0,66 dans l'état actuel des connaissances. C'est alors le minéral fougérite. Les produits de synthèse correspondent par contre à des valeurs de x variant de 0 à 1, grâce à des propriétés électroniques appropriées inédites.

Par « 0,33 », on désigne la valeur exacte 1/3.

Par « 0,66 », on désigne la valeur exacte 2/3.

La valeur de x au sein de l'oxyhydroxysel ferreux ferrique correspond au rapport Fe^{III}/(Fe^{II} + Fe^{III}) et peut être mesurée directement *in situ* par spectrométrie Mössbauer dans le solide.

La structure cristallographique des oxyhydroxysels ferreux ferriques, et plus particulièrement celle de l'oxyhydroxycarbonate, a été décrite en détails par Génin et al. (CR Geoscience, 2006).

Les trois domaines de x variant de 0 à 0,33, 0,33 à 0,66 et 0,66 à 1 ont alors été explicités (Génin et al., Solid State Sciences, 2006 et Rush et al, Solid State Science, 2008).

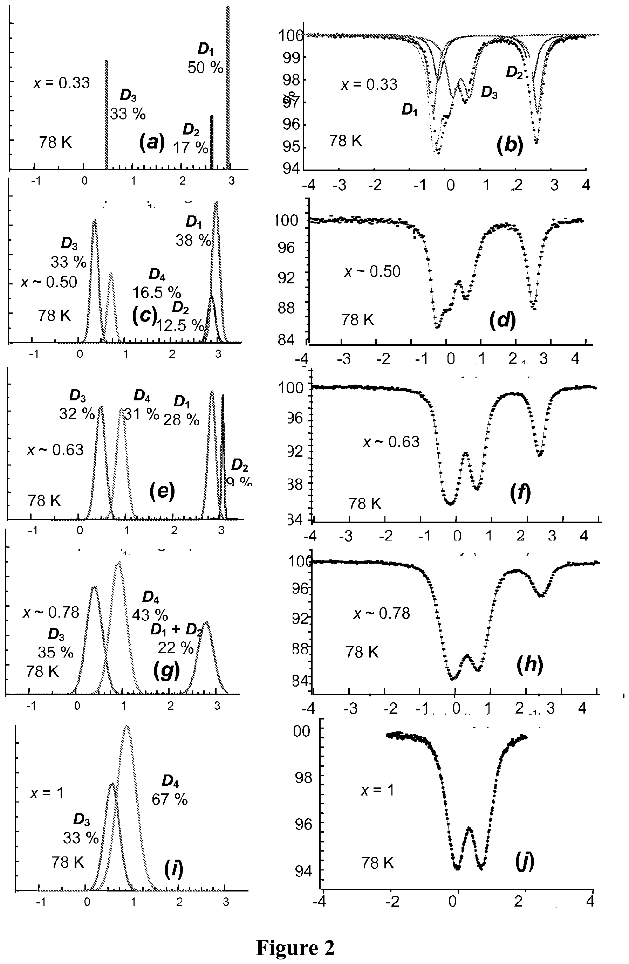

Les figures 2a-j présentent l'évolution des spectres Mössbauer mesurés à 78 K des échantillons d'oxyhydroxycarbonate ferreux ferrique à différentes proportions de x qui montrent la disparition progressive du Fe^{II} en se transformant en Fe^{III}. Les doublets ferreux, *D*₁ et *D*₂, se transfèrent dans le doublet ferrique *D*₄. Les figures 2a, c, e, g, i représentent les déconvolutions respectives des spectres des figures 2b, d, f, h, j.

Ainsi, une valeur de x supérieure à 0,66 correspond-elle à une structure qui impliquerait plus d'énergie pour pouvoir être atteinte dans les conditions naturelles, alors que se forme préférentiellement la magnétite, de Fe₃O₄ à γ-Fe₂O₃, avec une structure spinelle.

Pour des valeurs de x inférieures à 0,33, la structure cristallographique est métastable. Cette structure cristallographique s'obtient alors par cyclage voltampérométrique.

Le cyclage voltampérométrique est une méthode au cours de laquelle on fait varier avec un potentiomètre la tension du solide de façon continue cycliquement.

Le terme « métastable » désigne un système qui correspond à un minimum local de l'énergie mais où ce minimum n'est pas le plus bas, laissant à ce dernier le terme de stable.

Le passage du solide de x = 0,33 à x = 1 s'obtient typiquement de façon continue par oxydation progressive par l'eau oxygénée H₂O₂. Il s'agit d'un phénomène de déprotonation interne au composé, au cours duquel certains ions OH- deviennent O²⁻, transformant corrélativement des ions Fe^{II} en Fe^{III}.

En particulier, le passage du solide de x = 0,33 à x = 1 peut s'obtenir par oxydation immédiate du composé stœchiométrique, l'hydroxysel ferreux ferrique (x = 0,33) de formule [Fe^{II}₂ₙFe^{III}ₙ(OH)₆ₙ]ⁿ⁺ [Aⁿ⁻, m H₂O]ⁿ⁻, par l'eau oxygénée H₂O₂ (n représentant la charge de l'anion).

La déprotonation en continu de l'oxyhydroxycarbonate ferreux ferrique a été démontrée pour la première fois par Génin et al, Solid State Science 2006. Aucun autre oxyde (comportant ou non du fer) connu ne possède un tel phénomène de déprotonation de façon continue et une telle gamme pour le rapport x.

Le terme anion désigne tout ion de charge négative. Dans le cadre de la présente invention, l'anion a 1, 2 ou 3 charges négatives, et notamment 2 charges négatives (par exemple le carbonate).

Lorsque x est égal à 0, le composé ferreux ferrique devient simplement l'hydroxysel ferreux hydraté de formule [Fe^{II}₃ₙO₆ₙH₇ₙ]ⁿ⁺[Aⁿ⁻, m H₂O]ⁿ⁻. Il s'agit alors d'une protonation au cours de laquelle OH⁻ devient H₂O.

En particulier, lorsque l'anion a deux charges négatives, l'hydroxysel ferreux ferrique devient l'hydroxysel ferreux hydraté de formule [Fe^{II}₆O₁₂H₁₄]²⁺ A²⁻.

Lorsque x est égal à 1, l'hydroxysel ferreux ferrique devient simplement l'oxyhydroxysel ferrique de formule [Fe^{III}₃ₙO₆ₙH₄ₙ]ⁿ⁺ [Aⁿ⁻, m H₂O]ⁿ⁻.

En particulier, lorsque l'anion a deux charges négatives, l'oxyhydroxysel ferrique devient l'oxyhydroxysel ferrique de formule [Fe^{III}₆O₁₂H₈]²⁺ A²⁻.

Dans le cas où Aⁿ⁻ correspond au carbonate, le composé totalement ferrique est dénommé GR* (ou RV*), dénomination qui sera utilisée pour la suite de la description.

Dans une pile, batterie ou accumulateur, chaque élément du couple oxydant/réducteur est relié à une électrode.

L'oxyhydroxysel ferreux ferrique selon l'invention possède des propriétés d'oxydoréduction tout à fait inédites permettant la constitution d'une électrode (anode ou cathode).

Il existe plusieurs technologies à l'heure actuelle permettant de fabriquer des électrodes pour le stockage d'énergie, telles que la batterie au plomb, nickel-cadmium, nickel-métalhydrure, nickel-zinc, ion-lithium...

Toutes ces technologies utilisent des électrodes plus ou moins polluantes qui nécessitent de retirer le métal présent dans le matériau avant élimination du produit.

L'expression « non polluante » désigne donc un matériau qui ne possède pas *a priori* de composés ou contaminants susceptibles d'avoir des impacts négatifs sur tout ou partie d'un écosystème ou de l'environnement en général.

Un autre avantage de l'invention est donc de ne nécessiter aucun retrait de métal ni traitement du matériau avant son élimination permettant ainsi de disposer d'une électrode non polluante.

Dans un mode de réalisation avantageux, l'invention concerne l'utilisation du matériau défini ci-dessus dans lequel la capacité spécifique théorique d'énergie électrique de ladite électrode est supérieure ou égale à 160 Ah/kg, en particulier 245 Ah/kg.

Par exemple, dans le cas où Aⁿ⁻ représente le carbonate, cette capacité théorique est de 245 Ah/kg.

Par l'expression « capacité spécifique théorique d'énergie électrique », il faut comprendre la quantité d'électricité que le matériau peut restituer par rapport à sa masse.

L'un des avantages du matériau de l'invention est de posséder une capacité spécifique d'énergie électrique qui est supérieure d'environ 50% aux capacités spécifiques d'énergie électrique jusqu'à présent observées dans les matériaux commercialisés en particulier ion-Li et possède donc une puissance potentielle bien supérieure aux matériaux pour électrode connus.

A titre d'exemple, les matériaux commercialisés à ce jour n'atteignent que 160 Ah/kg par exemple LiCoO₂ (The 14th International Meeting on Lithium Batteries, June 22-28th, 2008, Tianjin, China)

Dans un mode de réalisation avantageux, la capacité théorique d'énergie électrique de l'électrode définie ci-dessus est comprise d'environ 160 Ah/kg à environ 300 Ah/kg, préférentiellement de 160 Ah/kg à 250 Ah/kg, encore plus préférentiellement de 200 Ah/kg à 250 Ah/kg, notamment 245 Ah/kg.

Selon un mode de réalisation avantageux, le matériau utilisé défini ci-dessus peut être mis en œuvre dans des dispositifs de stockage d'énergie tels que des piles électriques, des batteries, des accumulateurs ou des supercapacités.

Par l'expression « dispositif de stockage d'énergie », il faut comprendre un dispositif permettant soit de débiter uniquement l'énergie qu'il contient pour conduire à un dispositif qui ne possède plus d'énergie et ne peut pas en stocker à nouveau, soit de débiter l'énergie qu'il contient puis de se recharger en énergie pour pouvoir à nouveau la débiter.

Par « pile », il faut comprendre un appareil de stockage d'énergie qui modifie la structure chimique de ses éléments lors du fonctionnement mais qui ne peuvent pas revenir à leur état initial. Une pile possède donc une durée de fonctionnement limitée.

Par « batterie », il faut comprendre un appareil de stockage d'énergie qui modifie chimiquement la surface de ses éléments qui baignent dans un électrolyte, lors du fonctionnement, et qui peuvent ensuite revenir à leur état initial.

Par « accumulateur », il faut comprendre un dispositif destiné à stocker l'énergie électrique et qui peut la restituer ultérieurement.

Par « supercapacité » il faut comprendre un condensateur qui permet l'obtention d'une puissance instantanée requise sur une durée plus ou moins longue.

Par conséquent le matériau de l'invention est capable d'effectuer des charges et décharges électriques de durée variable en fonction des substitutions effectuées dans le matériau et permettant ainsi son utilisation soit dans des piles, des batteries, des accumulateurs ou des supercapacités.

En effet son avantage essentiel est de disposer d'un matériau possédant des temps de charge et décharge courts, de l'ordre de quelques minutes permettant par conséquent de mettre au point des substituts éventuels aux supercapacités, possédant une très grande quantité de charge électrique en un minimum de temps, caractéristique indispensable notamment pour une voiture électrique, par comparaison avec des temps de plusieurs jours pour des batteries ion-lithium où il faut se contenter de batteries de puissance.

Dans un mode de réalisation avantageux, l'invention concerne l'utilisation d'un matériau défini ci-dessus, dans lequel Aⁿ⁻ représente CO₃²⁻ conduisant à la formule (III) suivante :

[Fe^{II}₆₍₁₋ₓ₎Fe^{III}₆ₓO₁₂H₂₍₇₋₃ₓ₎]²⁺[CO₃²⁻, 3 H₂O]²⁻ (III)

dans laquelle x est compris de 0 à 1.

A titre d'exemple, pour les carbonates lorsque x = 0, l'hydroxysel ferreux hydraté est l'hydroxycarbonate ferreux hydraté de formule [Fe^{II}₆O₁₂H₁₄]²⁺ [CO₃²⁻, 3 H₂O]²⁻.

A titre d'exemple, pour les carbonates lorsque x = 1, l'oxyhydroxysel ferrique est l'oxyhydroxycarbonate ferrique de formule [Fe^{III}₆O₁₂H₈]²⁺ [CO₃²⁻, 3 H₂O]²⁻.

Le matériau de l'invention dans lequel Aⁿ⁻ représente CO₃²⁻ possède une capacité théorique de 245 Ah/kg, soit 800 Ah/L.

Un autre avantage de l'invention est donc de fournir un matériau possédant des temps de charge et décharge courts, de l'ordre de quelques minutes permettant par conséquent de disposer de supercapacités, possédant une très grande quantité de charge électrique en un minimum de temps, caractéristique indispensable notamment pour une voiture électrique, par comparaison avec des temps de plusieurs jours pour des batteries ion-lithium où il faut se contenter de batteries de puissance.

Selon un mode de réalisation avantageux, les protons disponibles H⁺ des groupes OH⁻ du matériau défini ci-dessus sont substitués partiellement ou totalement par des cations monovalents, notamment Li⁺ pour conduire à une structure de formule générale (IV) suivante dans le cas du carbonate dans lequel les protons sont substitués par du lithium:

[Fe^{II}₆₍₁₋ₓ)Fe^{III}₆ₓO₁₂H_{2(7-3y)}Li^{I}_{6(y-x)}]²⁺[CO₃²⁻, 3 H₂O]²⁻ (IV)

dans laquelle x est compris de 0 à 1 et 1≥y ≥ x

Par « protons disponibles », il faut donc comprendre certains protons des groupes OH⁻ qui entourent les cations Fe^{II} et Fe^{III}.

Par l'expression « substitué partiellement », il faut comprendre un échange d'une partie des protons disponibles, par un cation monovalent, par exemple le lithium.

Par « substitué totalement » il faut comprendre l'échange complet des protons H⁺ disponibles par un cation monovalent tel que le lithium Li⁺ soit y=1.

La substitution partielle ou totale des protons des groupes OH⁻ permet de modifier les temps de charge et décharge de l'électrode conduisant ainsi à des batteries pour lesquelles la disponibilité d'une puissance en continu est nécessaire, tout en conservant la capacité de charge électrique du matériau.

Un autre intérêt de la substitution est de pouvoir utiliser une contre électrode au lithium à -3 Volts, ainsi que l'électrolyte correspondant.

Dans un mode de réalisation avantageux, la valeur de y dans la formule IV citée ci-dessus est préférentiellement: y =1/3 ou y =1.

Dans un mode de réalisation avantageux, le Fe^{II} présent dans le matériau peut être substitué partiellement par des cations bivalents, notamment Ni²⁺ et/ou Co²⁺ pour conduire à une structure de formule générale (V) suivante dans le cas du carbonate dans lequel le Fe^{II} est substitué par Ni²⁺ et les protons H⁺ ne sont pas substitués :

[Fe^{II}_{6 (1-y-x)}Ni^{II}_{6y}Fe^{III}₆ₓO₁₂H₂₍₇₋₃ₓ₎]²⁺[CO₃²⁻, 3 H₂O]²⁻ (V)

dans laquelle x est compris de 0 à 1 et 0 < y ≤ 1-x.

Par l'expression « substitué partiellement », il faut comprendre un échange d'une partie des atomes de Fe^{II} par un cation bivalent tels que le nickel et/ou le cobalt de 1% à 50%, préférentiellement de 1% à 40%, préférentiellement de 1% à 30%, préférentiellement de 1% à 20%, préférentiellement de 1% à 10%, préférentiellement de 1% à 5%, notamment 5%.

Par conséquent, le Fe^{II} du matériau de l'invention peut être substitué par un atome de nickel, ou par un atome de cobalt ou par les deux.

Il est bien entendu que lorsque le Fe^{II} est substitué, l'atome d'hydrogène des groupes OH⁻ peut être également substitué par un cation monovalent.

La substitution des atomes de Fe^{II} seuls ou des atomes de Fe^{II} et d'hydrogène permet de modifier encore différemment les temps de charge et décharge de l'électrode conduisant ainsi à des utilisations très variées des électrodes constituées avec le matériau de l'invention.

Elle conduit à une diminution de la capacité qui sera fonction de la proportion de la substitution du Fe^{II}.

Dans un mode de réalisation avantageux, le Fe^{III} présent dans le matériau peut être substitué partiellement ou totalement par des cations trivalents, notamment Al³⁺ et/ou Co³⁺ pour conduire à une structure de formule générale (VI) suivante dans le cas du carbonate dans lequel le Fe^{III} est substitué par Al³⁺, et le Fe^{II} et/ou les protons H⁺ ne sont pas substitués :

[Fe^{II}₆₍₁₋ₓ₎Fe^{III}_{2(3x-z)}Al^{III}_{2z}O₁₂H₂₍₇₋₃ₓ₎]²⁺[CO₃²⁻, 3 H₂O]²⁻ (VI)

dans laquelle x est compris de 0 à 1 et 0 < z ≤ 3x.

Par conséquent, le Fe^{III} du matériau de l'invention peut être substitué par un atome d'aluminium, ou par un atome de cobalt ou par les deux.

L'intérêt de la substitution réside ici à changer le potentiel d'électrode et/ou la stabilité du matériau.

Il est bien entendu que lorsque le Fe^{III} est substitué, l'atome de Fe^{II} peut également être substitué comme indiqué ci-dessus ainsi que le proton des groupes OH⁻ comme indiqué ci-dessus ou seul l'atome de Fe^{II} peut être substitué comme indiqué ci-dessus ou encore seul l'atome d'hydrogène des groupes OH⁻ peut être substitué comme indiqué ci-dessus.

La substitution des atomes de Fe^{III} et/ou des atomes de Fe^{II} et/ou des protons des groupes OH⁻ permet de disposer de temps de charge et décharge très variés adaptables à de multiples applications.

Dans un mode de réalisation encore plus avantageux, le matériau défini ci-dessus constitue une cathode ou une anode en fonction du choix d'une contre-électrode présente dans ledit dispositif de stockage d'énergie.

Le fonctionnement d'une pile, batterie ou supercapacité nécessite la présence d'une anode et d'une cathode.

L'anode est l'électrode où a lieu une réaction électrochimique d'oxydation menant à la production d'électrons et constitue le pôle négatif du dispositif de stockage.

La cathode est l'électrode où se produit une réaction électrochimique de réduction menant à la consommation d'électrons et constitue le pôle positif.

Lorsque le matériau de l'invention est utilisé comme anode, la contre-électrode est par conséquent la cathode et vice et versa.

A titre d'exemple, lorsque le matériau de l'invention est utilisé en tant que cathode, l'anode peut alors être constituée parmi d'autres d'une électrode au lithium, ou au platine.

Lorsque le matériau est utilisé comme anode, la cathode est alors constituée d'autres électrodes bien connues de l'homme du métier et habituellement utilisées pour d'autres types de matériau constituant les électrodes actives.

Un autre avantage de l'invention est donc de pouvoir utiliser le matériau soit en tant que cathode, soit en tant qu'anode en fonction du dispositif de stockage d'énergie désiré en choisissant la contre-électrode adéquate.

Dans un mode de réalisation avantageux, ladite contre électrode utilisée avec le matériau de l'invention possède un couple Redox actif ayant une différence de potentiel supérieur à 1 Volt par rapport à l'électrode contenant ledit oxyhydroxysel ferreux ferrique.

L'avantage de disposer d'une ddp supérieure à 1 volt réside dans l'augmentation de la puissance délivrée. En effet, plus la ddp (U) est grande, plus la puissance délivrable est grande puisque P = U×I.

Un autre avantage est de limiter le nombre de cellules pour obtenir une tension correspondant aux besoins des appareils électriques ou électroniques déjà existants.

Selon un mode de réalisation avantageux, ledit matériau défini ci-dessus est utilisé sous forme de film déposé sur un support, notamment un support métallique tel que l'acier, le cuivre ou un oxyde tel que l'oxyde d'étain dopé à l'indium (ITO) ou un support de carbone, en particulier du graphite, l'épaisseur du film déposé pouvant varier entre environ 0,1 µm et 0,1 mm, préférentiellement d'environ 10 µm d'épaisseur à environ 0,1 mm d'épaisseur, en particulier environ 0,1 mm.

Par le terme « film », il faut comprendre une fine pellicule déposée sur un support.

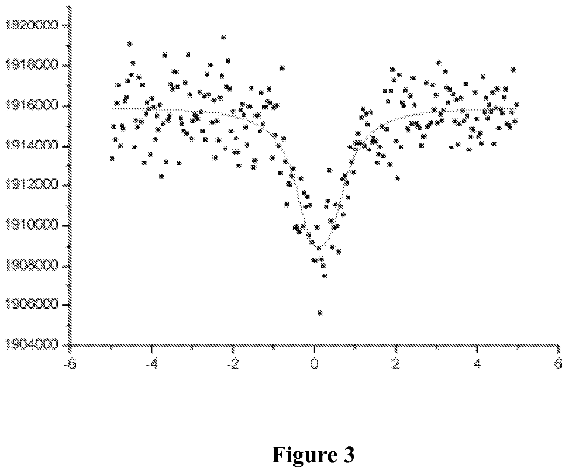

Le support peut être métallique tel que l'acier ou le cuivre ou un oxyde d'étain ou du carbone tel que le graphite. Le support est très important pour le fonctionnement du dispositif de stockage puisque qu'un film déposé sur un support d'or ou autres ne provoque aucun signal en spectroscopie Mössbauer (figure 3).

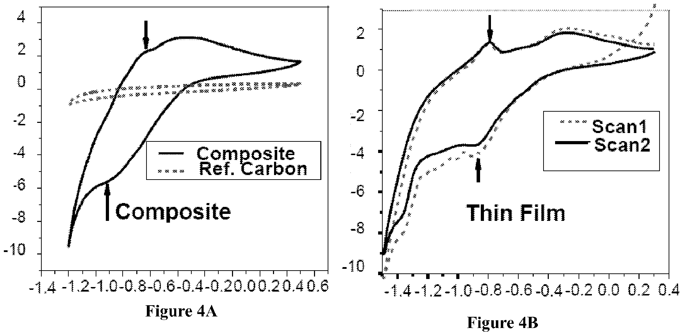

La figure 4b présente les courbes voltampérométriques obtenues avec un film de l'invention contenant 100 mg de matériau sous forme de carbonate: Fe^{III}₆O₁₂H₈CO₃, c'est-à-dire (GR(CO₃²⁻)* ou GR*), tel que défini ci-dessus et déposé sur un support.

Un autre avantage de l'invention est de pouvoir constituer aisément une électrode par simple dépôt d'un film de l'invention sur un support.

Dans un mode de réalisation encore plus avantageux, l'épaisseur du film défini ci-dessus est de 10 µm, préférentiellement 20 µm, encore plus préférentiellement 30 µm, notamment 40 µm, en particulier 50 µm, plus préférentiellement 60 µm, plus préférentiellement 70 µm, plus préférentiellement 80 µm, notamment 90 µm, en particulier 100 µm.

Selon un mode de réalisation avantageux, ledit matériau défini ci-dessus est utilisé sous forme de composite et comprend de plus un liant tel que de l'huile ou de la paraffine.

Par « composite », il faut comprendre un mélange de carbone, notamment de graphite avec le matériau de l'invention.

Par « liant », il faut comprendre un produit qui permet de lier le graphite avec le matériau de l'invention pour maintenir la cohésion du composite sans masquer une part importante de la surface électrochimiquement active.

Plusieurs liants peuvent être utilisés, notamment des polymères contenant des groupements donnant lieu à des liaisons chimiques ou hydrogènes tels que des groupes hydroxyles, carboxyles ou amides.

Des exemples de liants, sans être limités à ceux-ci sont le polytetrafluoroéthylène (PTFE), le polyfluorure de vinylidène (PVDF), le polyacrylonitrile (PAN), l'acide polyacrylique, le polyacrilamide, les élastomères tels que les caoutchouc styrène /butadiène (SBR), acrylonitrile/butadiène (NBR).

Préférentiellement, les liants de l'invention sont choisis parmi l'huile ou la paraffine.

La figure 4a compare les courbes voltampérométriques obtenues avec un composite de l'invention à base de carbone et contenant 100 mg de matériau sous forme de carbonate (GR*, l'oxyhydroxycarbonate ferrique) tel que défini ci-dessus, et avec du carbone pur.

Lorsque l'électrode au carbone pur est utilisée, aucun signal visible dans le sens de la réduction ou de l'oxydation ne peut être obtenu alors qu'avec le composite ou le film de l'invention un signal de grande amplitude est obtenu quel que soit le sens (réduction ou oxydation).

Dans un mode de réalisation avantageux, le liant utilisé dans le matériau défini ci-dessus est de la paraffine et ledit matériau composite comprend une matrice de carbone mélangée à l'oxyhydroxysel ferreux ferrique, le rapport oxyhydroxysel ferreux ferrique /carbone (m/m) étant compris d'environ 0,1 à environ 100, préférentiellement d'environ 0,1 à environ 10, préférentiellement d'environ 1 à environ 10, et avantageusement de 8 à 10, et le rapport oxyhydroxysel ferreux ferrique /paraffine (m/m) étant compris d'environ 1 à environ 10, et avantageusement d'environ 8 à environ 10.

Par l'expression « matrice de carbone », il faut comprendre une source de carbone en poudre qui peut être du graphite mais sans être limité à celui-ci.

La proportion du matériau de l'invention par rapport au carbone est importante pour le bon fonctionnement de l'électrode.

En dessous d'un rapport oxyhydroxysel ferreux ferrique /carbone (m/m) d'environ 0,1, le matériau ne sera plus fonctionnel.

Dans un autre mode de réalisation, le rapport oxyhydroxysel ferreux ferrique /carbone (m/m) ci-dessus défini peut être compris d'environ plus de 10 à environ 100 et le matériau aura les mêmes propriétés de fonctionnement que lorsque ledit rapport ci-dessus est ≤ 10 mais deviendra plus coûteux à produire voire mécaniquement moins résistant.

De la même manière, la proportion du matériau de l'invention par rapport au liant, notamment de la paraffine, est également importante pour le bon fonctionnement de l'électrode.

En deçà d'un rapport oxyhydroxysel ferreux ferrique /paraffine (m/m) égal à 0,1, une interaction trop forte du liant avec le matériau conduisant à un recouvrement trop important entraîne une baisse de la surface active.

Au delà d'un rapport oxyhydroxysel ferreux ferrique /paraffine (m/m) égal à 10, il ne permet plus une bonne adhésion du polymère de l'invention avec l'électrode.

Selon un mode de réalisation plus avantageux, le liant utilisé dans le matériau défini ci-dessus est de l'huile et ledit matériau composite comprend une matrice de carbone mélangée à l'oxyhydroxysel ferreux ferrique, le rapport oxyhydroxysel ferreux ferrique /carbone (m/m) étant compris d'environ 0,1 à environ 100, préférentiellement d'environ 0,1 à environ 10, préférentiellement d'environ 1 à environ 10, et avantageusement de 8 à 10 et le rapport oxyhydroxysel ferreux ferrique /huile (m/m) étant compris d'environ 1 à environ 10, et avantageusement d'environ 8 à environ 10.

Comme indiqué ci-dessus, la proportion du matériau de l'invention par rapport au carbone et par rapport au liant, notamment de l'huile est importante pour le bon fonctionnement de l'électrode.

Dans un mode de réalisation avantageux, l'invention concerne l'utilisation d'un matériau défini ci-dessus, dans laquelle la cellule dudit dispositif de stockage comprend un électrolyte, en particulier un acide tel que l'acide sulfurique ou l'acide chlorhydrique dans le cas du carbonate ou du sulfate.

Par « cellule » il faut comprendre l'ensemble des différents éléments qui constitue le dispositif de stockage d'énergie.

Par « électrolyte », il faut comprendre toute substance ou composé qui, à l'état liquide ou en solution, ou sous forme de gel permet le passage du courant électrique par déplacement d'ions et en particulier de protons.

Selon un mode de réalisation avantageux, l'invention concerne l'utilisation d'un matériau tel que défini ci-dessus dans laquelle la différence de potentiel (ddp) de ladite cellule dudit dispositif de stockage est comprise d'environ 1V à environ 4V, préférentiellement d'environ 3V à environ 4V, en particulier 1,8V.

Par « différence de potentiel » il faut comprendre la tension électrique mesurée entre l'anode et la cathode.

Si la ddp est inférieure à 1V, elle est trop faible pour pouvoir faire fonctionner les appareils électriques.

A l'opposé, si elle est trop élevée, au-delà de 4V, elle ne pourra être utilisée dans la majeure partie des appareils électriques ou électroniques actuels qui ont été conçus pour les autres types de piles ou batteries.

L'avantage d'une tension de 1,8 V est de pouvoir fonctionner avec la majeure partie des appareils électriques ou électroniques actuels les plus courants.

Selon un autre aspect, la description décrit un film déposé sur un support, notamment un support métallique tel que l'acier, le cuivre ou un oxyde tel que l'oxyde d'étain dopé à l'indium (ITO) ou un support de carbone, en particulier du graphite et comprenant au moins un oxyhydroxysel ferreux ferrique de formule générale (I), (II), (III), (IV), (V) ou (VI) définie ci-dessus et,
dans laquelle Aⁿ⁻ est un anion de charge n, n prenant les valeurs 1, 2 ou 3, notamment 2, m est un nombre entier variant de 1 à 10, notamment de 1 à 4, avantageusement 3, et x est compris de 0 à 1, l'épaisseur du film déposé pouvant variée entre environ 0,1 µm et 0,1 mm.

Selon encore un autre aspect, l'invention concerne un composite comprenant au moins un oxyhydroxysel ferreux ferrique de formule générale (I), (II), (III), (IV), (V) ou (VI) définie ci-dessus et,
dans laquelle Aⁿ⁻ est un anion de charge n, n prenant les valeurs 1, 2 ou 3, notamment 2, m est un nombre entier variant de 1 à 10, notamment de 1 à 4, avantageusement 3, et x est compris de 0 à 1.

Selon un mode de réalisation avantageux, le composite défini ci-dessus, comprend de plus un liant, notamment de l'huile ou de la paraffine.

Selon un mode de réalisation plus avantageux, l'invention concerne un composite défini ci-dessus, dans lequel ledit liant est de la paraffine et ledit matériau composite comprend une matrice de carbone mélangée à l'oxyhydroxysel ferreux ferrique, le rapport oxyhydroxysel ferreux ferrique /carbone (m/m) étant compris d'environ 0,1 à environ 100, préférentiellement d'environ 0,1 à environ 10, préférentiellement d'environ 1 à environ 10, et avantageusement de 8 à 10, et le rapport oxyhydroxysel ferreux ferrique /paraffine (m/m) étant compris d'environ 1 à environ 10, et avantageusement d'environ 8 à environ 10.

Dans un mode de réalisation encore plus avantageux, l'invention concerne un composite défini ci-dessus dans lequel ledit liant est de l'huile et ledit matériau composite comprend une matrice de carbone mélangée à l'oxyhydroxysel ferreux ferrique, le rapport oxyhydroxysel ferreux ferrique /carbone (m/m) étant compris d'environ 0,1 à environ 100, préférentiellement d'environ 0,1 à environ 10, préférentiellement d'environ 1 à environ 10, et avantageusement de 8 à 10 et le rapport oxyhydroxysel ferreux ferrique /huile (m/m) étant compris d'environ 1 à environ 10, et avantageusement d'environ 8 à environ 10.

Dans un mode de réalisation avantageux, l'invention concerne un film ou composite définis ci-dessus, dans lequel Aⁿ⁻ représente CO₃²⁻.

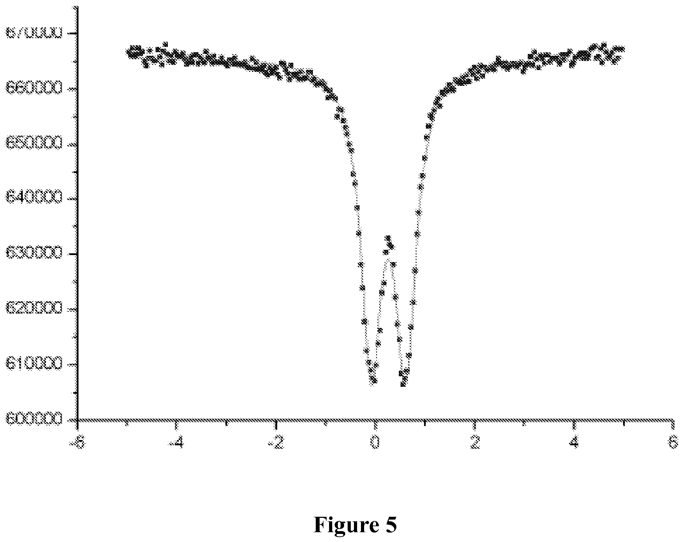

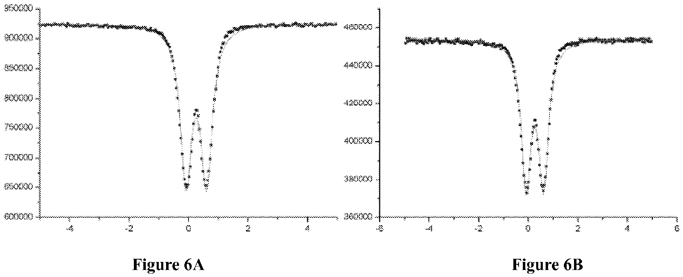

Les figures 5, 6a et 6b comparent les spectres Mössbauer obtenus avec une référence de GR*(1) (obtenu par oxydation violente d'un hydroxycarbonate ferreux ferrique selon l'exemple 2) et un matériau de l'invention sous forme de composite à 50 mg de GR*(1) (figure 6a) et *100* mg de GR*(1) (figure 6b) respectivement.

Les spectres obtenus sont similaires qu'il s'agisse de la référence ou des composites et ce quelle que soit la quantité de matériau utilisée. De plus, cela indique que même après des cycles redox, les matériaux de l'invention ont des propriétés similaires à celles qu'ils possédaient à l'origine.

Le tableau I présente les paramètres hyperfins mesurés à température ambiante pour les deux composites et la référence de GR*(1).

**TABLEAU I**

| **Type d'électrode** | **QS (mm/s)** | **IS (mm/s)** | **Γ (mm/s)** |
|---|---|---|---|
| Référence GR*(1) | 0,70 | 0,26 | 0,25 |
| Composite carbone/50 mg GR*(1) | 0,70 | 0,26 | 0,23 |
| Composite carbone/100 mg GR*(1) | 0,70 | 0,26 | 0,24 |

| | | | |
|---|---|---|---|
| QS : (quadrupole splitting) écart quadrupolaire ; IS : (isomer shift) déplacement isomérique, Γ ; demi-largeur d'un pic à mi-hauteur | | | |

Dans un mode de réalisation avantageux, le film ou le composite défini ci-dessus est utilisé comme cathode ou anode d'un dispositif de stockage d'énergie en fonction du choix de la contre-électrode.

Dans un autre aspect, l'invention concerne un dispositif de stockage d'énergie tel que pile, batterie, accumulateur ou supercapacité comprenant une cathode ou une anode constituée d'un film ou d'un composite défini ci-dessus..

Par conséquent, un autre avantage de l'invention est de pouvoir utiliser les électrodes ci-dessus définies pour la mise en œuvre de dispositifs de stockage tels que des piles, des batteries, des accumulateurs ou des supercapacités ayant une capacité théorique supérieure de 50% à la capacité théorique des piles, batteries, accumulateurs ou supercapacités actuellement commercialisés, possédant une vitesse de charge et décharge très rapide de l'ordre de quelques minutes par rapport aux piles ion-Lithium existant actuellement et constitués de matériau non polluant et facilement éliminable ou recyclable.

Selon un mode de réalisation avantageux, le dispositif de stockage d'énergie tel que pile, batterie, accumulateur ou supercapacité définis ci-dessus, comprend de plus un électrolyte, en particulier un acide tel que l'acide sulfurique ou l'acide chlorhydrique dans le cas du carbonate ou du sulfate.

Selon un autre aspect, la présente invention concerne un dispositif de stockage d'énergie tel qu'une pile, batterie, accumulateur ou surcapacité défini ci-dessus, comprenant :
a. une anode constituée d'oxyhydroxysel ferreux ferrique dans lequel l'anion est divalent, et est notamment du sulfate (SO₄²⁻) ou du carbonate (CO₃²⁻),
b. une cathode en fer métallique,
c. un électrolyte, notamment sous forme de gel ou de solution, à pH inférieur à 5, notamment à pH de 2 ou 3.

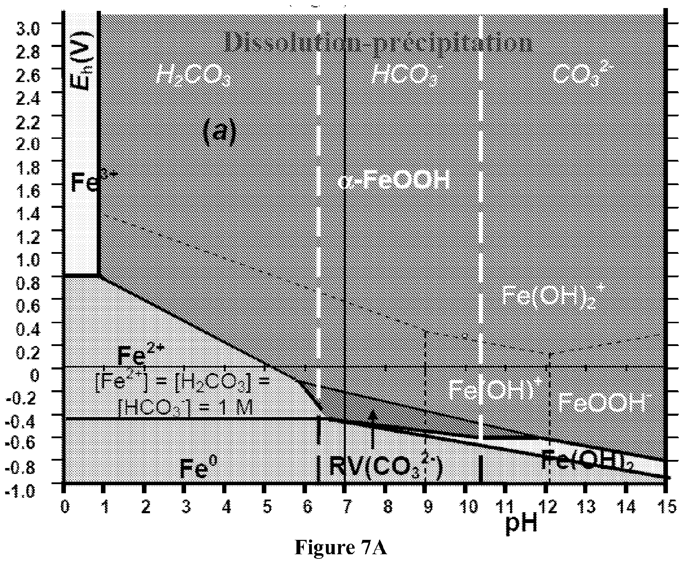

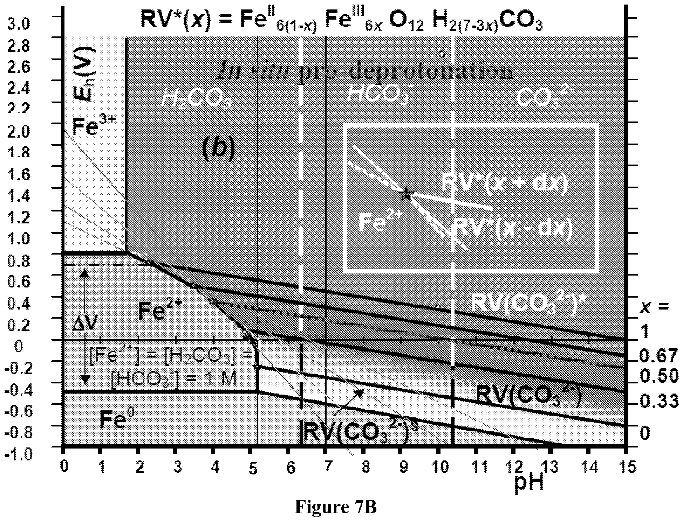

Les électrodes correspondent au couple Fe(0)/Fe(II) face au couple Fe(II)/RV^{∗}Fe(III) dans un électrolyte acide aux alentours de pH 2 (voir les figures 7A et 7B).

Selon encore un autre aspect, la présente description décrit un procédé de mise en œuvre d'un dispositif de stockage d'énergie tel que pile, batterie, accumulateur ou supercapacité comprenant une étape de protonation ou déprotonation du matériau défini ci-dessus.

Lors de la déprotonation interne au matériau, au cours de laquelle certains ions OH⁻ deviennent O²⁻, il y a perte de protons résultant d'une oxydation transformant corrélativement des ions Fe^{II} en Fe^{III}.

Le matériau de l'invention constitue alors une anode.

Inversement, lors de la protonation interne au matériau, au cours de laquelle certains O²⁻ deviennent ions OH⁻, puis les OH⁻ deviennent H₂O, il y a gain de protons résultant d'une réduction transformant corrélativement des ions Fe^{III} en Fe^{II}.

Le matériau de l'invention constitue alors une cathode.

Dans le cas de batteries, accumulateurs ou supercapacités, ces deux fonctions alternent, selon que le dispositif débite du courant ou qu'il se charge.

Selon encore un autre aspect, l'invention concerne un procédé de fabrication d'un composite défini ci-dessus, comprenant les étapes suivantes :
a. Malaxage dans une matrice de carbone d'oxyhydroxysel ferreux ferrique de formule générale (I), (II), (III), (IV), (V) ou (VI) définie ci-dessus, pour obtenir un mélange matrice-oxyhydroxysel ferreux ferrique,
b. Chauffage à une température comprise d'environ 30°C à 90°C, préférentiellement d'environ 45°C à 80°C, préférentiellement d'environ 60°C à 70°C en particulier 60°C dudit mélange avec de l'huile ou de la paraffine pour obtenir un composite.

Le chauffage avec l'huile ou la paraffine permet d'effectuer la liaison et de permettre la mise en forme du composite avec la forme du support de l'électrode.

Selon un autre aspect, la description décrit un procédé de fabrication d'un film défini ci-dessus, comprenant une étape de dépôt du matériau, soit chimique ou électrochimique en phase aqueuse ou par voie sèche, soit par « spindropping »,

Les termes « dépôt chimique », « dépôt électrochimique », et « spindropping », sont des techniques bien connues de l'homme du métier.

Le procédé par dépôt chimique ou électrochimique permet d'obtenir un film plus stable lorsque qu'il est immergé dans une solution d'électrolyte (NaHCO₃ 0,04M).

Dans un autre mode de réalisation, le procédé de fabrication d'un film, défini ci-dessus, comprend les étapes suivantes :
a. dépôt d'une couche fine d'environ 0,1 µm d'épaisseur à environ 0,1 mm d'épaisseur, préférentiellement d'environ 10 µm d'épaisseur à environ 0,1 mm d'épaisseur, en particulier environ 0,1 mm d'oxyhydroxysel ferreux ferrique de formule générale (I), (II), (III), (IV), (V) ou (VI) défini ci-dessus, sur un support tel que défini ci-dessus, pour obtenir un d'oxyhydroxysel ferreux ferrique supporté,
b. séchage à une température comprise d'environ 15°C à 40°C, préférentiellement d'environ 20°C à 30°C, en particulier d'environ 20°C à environ 25°C du produit obtenu à l'étape précédente pour obtenir un film.

### DESCRIPTION DES FIGURES

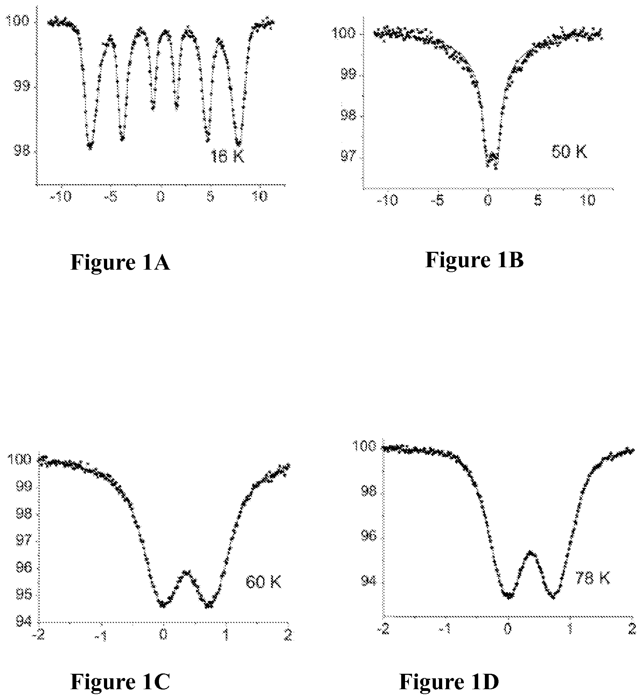

Les figures 1a-d, représentent les spectres Mössbauer obtenus respectivement à une température de 16, 50, 60 et 78 K avec le matériau (GR*), oxyhydroxycarbonate ferrique de formule [Fe^{III}₆O₁₂H₈]²⁺CO₃²⁻ et préparé par oxydation violente avec H₂O₂ de l'hydroxycarbonate ferreux ferrique [Fe^{II}₄Fe^{III}₂(OH)₁₂]²⁺CO₃²⁻ de l'exemple 2.
   L'axe des ordonnées correspond à la transmittance en % et l'axe des abscisses correspond à la vitesse en mm/s.
Les figures 2b, d, f ,h, j représentent les spectres Mössbauer mesurés à 78 K pour des échantillons d'oxyhydroxycarbonate ferreux ferrique Fe^{II}_{6(1-*x*)}Fe^{III}_{6*x*} O₁₂ H_{2(7-3*x*)} CO₃ en faisant varier x (Fig.2b : x = 0,33 ; Fig.2d : x = 0,50 ; Fig.2f : x = 0,63 ; Fig.2h : x = 0,78 ; Fig.2j : x = 1.
   L'axe des ordonnées correspond à la transmittance en % et l'axe des abscisses correspond à la vitesse en mm/s.
Les figures 2a, c, e, g, i représentent les déconvolutions des spectres afférents, b, d, f, h, j : les abondances relatives de composantes sont indiquées.
La figure 3 représente le spectre Mössbauer obtenu à température ambiante avec le matériau de l'invention (GR*) sous forme de film déposé sur un substrat d'or.
   L'axe des ordonnées correspond à l'intensité en unités arbitraires et l'axe des abscisses correspond à la vitesse en mm/s.
Les figures 4a-b représentent les courbes voltampérométriques obtenues à partir du matériau GR*, l'oxyhydroxycarbonate ferrique, [Fe^{III}₆O₁₂H₈]²⁺ [CO₃²⁻, 3 H₂O]²⁻ sous différentes formes à 100 mg de GR*.
La figure 4a représente la courbe obtenue avec un composite de GR* avec du carbone (trait plein) de l'exemple 3 ou une référence de carbone seul (traits pointillés).
   L'axe des ordonnées correspond au courant obtenu en µA et l'axe des abscisses correspond au potentiel en volts.
La figure 4b représente la courbe obtenue avec un film de GR* de l'exemple 4 (les traits pleins et traits pointillés correspondant à deux cycles).
   L'axe des ordonnées correspond au courant obtenu en µA et l'axe des abscisses correspond au potentiel en volts.
La figure 5 représente le spectre Mössbauer obtenu avec le matériau de l'invention (GR*) de référence.
   L'axe des ordonnées correspond à l'intensité en unités arbitraires et l'axe des abscisses correspond à la vitesse en mm/s.
Les figures 6a-b représentent le spectre Mössbauer obtenu avec le matériau de l'invention (GR*) sous forme de composite.
La figure 6a correspond au composite de carbone avec 50 mg de GR*.
   L'axe des ordonnées correspond à l'intensité en unités arbitraires et l'axe des abscisses correspond à la vitesse en mm/s.
La figure 6b correspond au composite de carbone avec 100 mg de GR*.
   L'axe des ordonnées correspond à l'intensité en unités arbitraires et l'axe des abscisses correspond à la vitesse en mm/s.
Les figure 7A et 7B représentent le diagramme *E*h-pH dit de Pourbaix de l'ensemble des compositions de l'oxyhydroxycarbonate ferreux ferrique RV*(x) (ou GR*(x)) de formule générale Fe^{II}_{6(1-*x*)}Fe^{III}_{6*x*}O₁₂ H_{2(7-3*x*)}CO₃. Le diagramme de Pourbaix est constitué d'un ensemble de droites parallèles de pente -0,0591 (loi de Nernst). Il peut être comparé à celui de la rouille verte RV (ou GR) stoechiométrique, utile en corrosion des matériaux ferreux.
La figure 7A présente le diagramme de Pourbaix de l'hydroxycarbonate Fe^{II-III}, [Fe^{II}₄ Fe^{III}₂ (OH)₁₂]²⁺[CO₃²⁻, 3H₂O]²⁻ en mode de dissolution-précipitation.
   Dans un processus habituel de corrosion, la couche de rouille verte RV se dissout à l'issue de l'oxydation aqueuse pour précipiter à nouveau sous forme d'oxyhydroxyde ferrique, FeOOH, qui selon le milieu peut être la goethite α-FeOOH, la lépidocrocite γ-FeOOH , la ferrihydrite δ'-FeOOH voire l'akaganéite β-FeOOH. Certes le domaine de RV est limité mais lorsque l'on regarde l'ensemble des domaines de Fe(OH)₂, RV et Fe^{II} (Fig. 7A), toutes les valeurs de pH sont concernées et la dissolution de RV entraîne la corrosion du matériau ferreux. Même si elle est lente, elle est inéluctable quelque soit le pH.
La figure 7B présente le diagramme de Pourbaix de l'oxyhydroxycarbonate Fe^{II-III}, Fe^{II}_{6(1-*x*)} Fe^{III}_{6*x*} O₁₂ H_{2(7-3*x*)}CO₃ en mode de in situ déprotonation. *A contrario,* si on assure une oxydation rapide par déprotonation *in situ,* par exemple avec H₂O₂, séchage puis mise à l'air, solution basique, mise sous tension (voltampéromètre), oxygénation violente, le matériau actif RV*(*x*) est structurellement pérennisé. Le diagramme (Fig.7B) montre qu'il correspond à un vaste domaine tant que le pH de la solution dépasse 5 et que la transition qui correspond à l'ensemble des droites de Nernst sur la gamme complète de charge et décharge, du composé ferreux RV(CO₃²⁻)§, Fe^{II}₆ O₁₂ H₁₄ CO₃, au ferrique RV(CO₃²⁻)*, Fe^{III}₆ O₁₂ H₈ CO₃. A pH 7, la gamme de tension va d'environ -0.5 à +0.6 V (référence électrode standard à hydrogène).

### EXEMPLES

### EXEMPLE 1: Spectroscopie Mössbauer

La spectroscopie de réflexion Mössbauer utilisant l'appareil MIMOS a été employée pour déterminer l'état d'oxydation du fer dans les composites et les films. L'appareil MIMOS opère par géométrie de rétrodiffusion pour détecter les radiations réémises (14,4 keV pour les rayons-gamma et 6,4 keV pour les rayons-X). MIMOS est également utilisé pour étudier les composés du fer présents sur le sol de la planète Mars. (NASA et Agence Européenne Spatiale)

Les spectres Mössbaurer ont été calibrés en utilisant une feuille de fer à température ambiante et ont été ajustées avec des lignes de forme Lorentzienne et un seul doublet quadrupolaire ferrique.

### EXEMPLE 2 : Préparation du matériau

L'hydroxycarbonate ferreux ferrique stœchiométrique [Fe^{II}₄Fe^{III}₂(OH)₁₂]²⁺CO₃²⁻ GR(CO₃²⁻) est préparé par synthèse chimique, soit par oxydation d'un précipité de Fe(OH)₂ en présence d'ions carbonate comme décrit par Génin et al. (2006, Geoscience), soit par co-précipitation des ions Fe^{II} et Fe^{III} en présence d'anions comme décrit par Ruby et al. (2006, Geoscience).

Cet hydroxycarbonate ferreux ferrique est alors déprotoné complètement avec un oxydant violent tel que H₂O₂ en excès (GR* (1)) ou à l'air après séchage (GR* (2)), comme décrit dans Génin et al. (2006, Geoscience) pour former l'oxyhydroxycarbonate ferrique de formule [Fe^{III}₆O₁₂H₈]²⁺ CO₃²⁻ (GR*(1) ou (2)).

Le produit obtenu est caractérisé par diffraction des rayons X, spectrométrie Mössbauer, spectrométrie de vibration (Raman ou infra rouge) et microscopie électronique par transmission.

Les paramètres Mössbauer de GR(CO₃²⁻) et GR* sont présentés dans le tableau II ci-après :

**Tableau II :Paramètres Mössbauer de GR(CO₃²⁻), GR*(1) obtenu par oxydation violente de GR(CO₃²⁻) et GR*(2) obtenu par oxydation à l'air par séchage de GR(CO₃²⁻).**

| Echantillon | T (K) | | *δ* (mm s⁻¹) | (*Δ*) ou ε (mm s⁻¹) | (*δΔ*) (mm s⁻¹) | (*H*) (kOe) | (*δH*) (kOe) | *RA* % |
|---|---|---|---|---|---|---|---|---|
| GR(CO₃²⁻) | 12 K | *D*₁ | 1,29 | 2,91 | | | | 49 |
| | | *D*₂ | 1,29 | 2,57 | | | | 19 |
| | | *D*₃ | 0,50 | 0,40 | | | | 32 |
| GR* (1) | 16 K | *S*₁ | 0,48 | ∼0,00 | | 447 | 25 | 51 |
| | | *S*₂ | 0,48 | ∼0,00 | | 401 | 42 | 15 |
| | | *S*₃ | 0,48 | ∼0,00 | | 480 | 16 | 34 |
| | 78 K | *D*₁ | 0,47 | 0,88 | 0,41 | | | 67 |
| | | *D*₃ | 0,47 | 0,60 | 0,30 | | | 33 |
| GR*(2) | 16 K | *S*₁ | 0,48 | ∼0,00 | | 477 | 21 | 70 |
| | | *S*₃ | 0,48 | ∼0,00 | | 440 | 37 | 30 |
| | 10 K | *D* | 0,47 | 0,77 | 0,22 | | | 100 |

| | | | | | | | | |
|---|---|---|---|---|---|---|---|---|
| *δ* : déplacement isomérique *Δ* et δ*Δ*: écart quadrupolaire et déviation standard *ε* : déplacement du quadrupole | | | | | | | | |

Le tableau II montre que GR(CO₃²⁻) est paramagnétique en dessous de 12 K. Son spectre Mössbauer présente trois doublets à 12 K (*D*₁, *D*₂ *et D*₃)*. D*₁ et *D*₂ correspondent aux ions Fe^{II} et *D*₃ correspond aux ions Fe^{III}.

GR*(1) obtenu par oxydation violente ne présente pas de trace d'ions Fe^{II} confirmant l'oxydation totale de GR(CO₃²⁻).

GR*(2) obtenu par oxydation à l'air ne présente pas non plus de trace d'ions Fe^{II}.

Les spectres Mössbauer de (GR* (1) obtenus à 16 K, 50 K, 60 K et 78 K sont représentés dans les figures 1a, 1b, 1c et 1d.

### EXEMPLE 3: Préparation des composites

L'oxyhydroxycarbonate (GR*(1)) et le carbone en poudre sont mélangés avec de la paraffine ou de l'huile en tant que liant. Dans le cas de la paraffine, les composites sont fabriqués en mélangeant 250 mg de carbone et 50 ou 100 mg de GR*(1), puis le mélange est chauffé en présence de 100 mg de paraffine pour lier le tout.

Les spectres Mössbauer des composites obtenus avec 50 ou 100 mg de GR*(1) (figure 6A et 6B) sont comparables à celui de GR*(1).

### EXEMPLE 4: Préparation des films

Les films fins de GR*(1) ont été préparés sur des supports de carbone ou des supports métalliques ou des supports d'oxyde tel que l'oxyde d'étain dopé à l'indium (ITO) par dépôt chimique ou électrochimique d'un sédiment fin puis séchage à 60°C ou par « spindropping » d'un sédiment fin puis séchage à température ambiante.

### EXEMPLE 5: Etudes électrochimiques

Les courbes voltampérométriques des composites et des films ont été obtenues en utilisant ces matériaux en tant qu'électrode de travail. Une électrode d'Ag/AgCl a été utilisée en tant qu'électrode de référence pour la caractérisation des composites et une pseudo-référence a été utilisée pour les films. Ces électrodes ont été maintenues en contact avec une solution de NaHCO₃ 0,04M. Le pH de la solution a été tamponné à 8-9 par le carbonate. Les études électrochimiques ont été effectuées sur un potentiostat Autolab PGSTAT12 contrôlé avec un logiciel PGES pour le balayage en tension.

### EXEMPLE 6: Préparation d'une pile

Une batterie selon le diagramme de la figure 7B a été développée.
La réduction cathodique (borne + de la batterie) correspond à la réaction :

Fe^{III}₆O₁₂H₈CO₃ + 6e⁻ + 6H⁺ -->Fe^{II}₆ O₁₂H₁₄CO₃.

A l'anode, le fer métallique est en équilibre avec les ions Fe²⁺ en solution :

Fe⁰ --> Fe²⁺ + 2 e⁻

L'électrolyte est une solution acide de pH inférieur à 5, de préférence 2 (par exemple de l'acide sulfurique ou de l'acide chlorhydrique).

La capacité spécifique théorique d'énergie électrique de cette pile est d'environ 245Ah/kg. A un pH de 2, la figure 7 montre une valeur de Eh égale à 1,2 V entre une contre-électrode de fer métal et RV* (ou GR*), ce qui conduit à une puissance de 300 Wh/kg environ.

Ce type de pile est par conséquent très compétitif par rapport aux piles au plomb et permet avec 10 cellules d'obtenir une pile de 12V.

Un autre avantage du matériau de l'invention est qu'il permet la fabrication de pile dont le poids est cinq fois plus léger que celui des piles au plomb.

## Revendications

1. Utilisation d'un matériau comprenant au moins un composé apparenté à un hydroxyde double lamellaire (HDL) ferreux ferrique, ledit composé comportant au moins un cation divalent D^{II}, et au moins un cation trivalent T^{III}, de formule générale suivante :
[D^{II}₃ₙ₍₁₋ₓ₎T^{III}₃ₙₓO₆ₙHₙ₍₇₋₃ₓ₎]ⁿ⁺ [Aⁿ⁻, m H₂O]ⁿ⁻ (I)
dans laquelle Aⁿ⁻ est un anion de charge n, n prenant les valeurs 1, 2 ou 3, notamment 2, m est un nombre entier variant de 1 à 10, notamment de 1 à 4, avantageusement 3,
et x est compris de 0 à 1,
ledit composé comprenant une proportion minimale de Fe^{II} de 1% permettant la transformation d'un ion Fe^{II} en ion Fe^{III},
pour la mise en oeuvre d'une électrode dans des dispositifs de stockage d'énergie tels que des piles électriques, des batteries, des accumulateurs ou des supercapacités, la capacité théorique d'énergie électrique de ladite électrode est supérieure ou égale à 160 Ah/kg, en particulier 245 Ah/kg.

2. Utilisation selon la revendication 1, d'un matériau comprenant au moins un oxyhydroxysel ferreux ferrique de formule générale (II) suivante :
[Fe^{II}₃ₙ₍₁₋ₓ₎Fe^{III}₃ₙₓO₆ₙHₙ₍₇₋₃ₓ₎]ⁿ⁺[Aⁿ⁻, m H₂O]ⁿ⁻ (II)
dans laquelle Aⁿ⁻ est un anion de charge n, n prenant les valeurs 1, 2 ou 3, notamment 2, m est un nombre entier variant de 1 à, 10, notamment de 1 à 4, avantageusement 3, et x est compris de 0 à 1,
lequel oxyhydroxysel ferreux ferrique peut être modifié de façon partielle par la substitution partielle ou totale d'au moins un de ses éléments, pour la mise en oeuvre d'une électrode non polluante

3. Utilisation d'un matériau selon l'une des revendications 1 à 2, dans lequel Aⁿ⁻ représente CO₃²⁻ conduisant à la formule suivante :
[Fe^{II}₆₍₁₋ₓ₎Fe^{III}₆ₓO₁₂H₂₍₇₋₃ₓ₎]²⁺[CO₃²⁻, 3 H₂O]²⁻ (III)
dans laquelle x est compris de 0 à 1.

4. Utilisation d'un matériau selon l'une des revendications 1 à 3, dans lequel les protons H⁺ disponibles des groupes OH⁻ sont substitués partiellement ou totalement par des cations monovalents, notamment Li⁺ pour conduire à une structure de formule générale (IV) suivante dans le cas du carbonate dans lequel les protons sont substitués par du lithium:
[Fe^{II}₆₍₁₋ₓ₎Fe^{III}₆ₓO₁₂H_{8+6(1-y)}Li^{I}_{6(y-x)}]²⁺ [CO₃²⁻, 3 H₂O]²⁻ (IV)
dans laquelle x est compris de 0 à 1 et 1≥y ≥ x, et
optionnellement :
le Fe^{II} est substitué partiellement par des cations bivalents, notamment Ni²⁺ et/ou Co²⁺ pour conduire à une structure de formule générale (V) suivante dans le cas du carbonate dans lequel le Fe^{II} est substitué par Ni²⁺ et les protons H⁺ ne sont pas substitués :
[Fe^{II}_{6(1-y-x)}Ni^{II}_{6y}Fe^{III}₆ₓO₁₂H₂₍₇₋₃ₓ₎]²⁺ [CO₃²⁻, 3 H₂O]²⁻ (V)
dans laquelle x est compris de 0 à 1 et 0 < y ≤ 1-x, et/ou
le Fe^{III} est substitué partiellement ou totalement par des cations trivalents, notamment Al³⁺ et/ou Co³⁺ pour conduire à une structure de formule générale (VI) suivante dans le cas du carbonate dans lequel le Fe^{III} est substitué par Al³⁺, et le Fe^{II} et/ou les protons H⁺ ne sont pas substitués :
[Fe^{II}₆₍₁₋ₓ₎Fe^{III}_{2(3x-z)}Al^{III}_{2z}O₁₂H₂₍₇₋₃ₓ₎]²⁺ [CO₃²⁻, 3 H₂O]²⁻ (VI)
dans laquelle x est compris de 0 à l.et 0 < z ≤ 3x..

5. Utilisation d'un matériau selon l'une des revendications 1 à 4, dans laquelle ledit matériau constitue une cathode ou une anode, associé à une contre-électrode correspondante présente dans ledit dispositif de stockage d'énergie et qui possède un couple redox actif ayant une différence de potentiel supérieur à 1 Volt par rapport à 1 'électrode contenant ledit oxyhydroxysel ferreux ferrique..

6. Utilisation selon l'une des revendications 1 à 5, dans laquelle ledit matériau est sous forme de composite et comprend une matrice de carbone mélangée à l'oxyhydroxysel ferreux ferrique, le rapport oxyhydroxysel ferreux ferrique/carbone (m/m) étant compris d'environ 0,1 à environ 100, préférentiellement d'environ 0,1 à environ 10, préférentiellement d'environ 1 à environ 10, et avantageusement de 8 à 10, et comprend de plus un liant,
tel que de l'huile, le rapport oxyhydroxysel ferreux ferrique /huile (m/m) étant compris d'environ 1 à environ 10, et avantageusement d'environ 8 à environ 10, ou, de la paraffine, le rapport oxyhydroxysel ferreux ferrique /paraffine (m/m) étant compris d'environ 1 à environ 10, et avantageusement d'environ 8 à environ 10.

7. Utilisation selon l'une des revendications 1 à 6, dans laquelle la cellule dudit dispositif de stockage comprend un électrolyte, en particulier un acide tel que l'acide sulfurique ou l'acide chlorhydrique dans le cas du carbonate ou du sulfate.

8. Utilisation selon la revendication 7, dans laquelle la différence de potentiel (ddp) de ladite cellule dudit dispositif de stockage est comprise d'environ 1 V à environ 4 V, préférentiellement d'environ 3 V à environ 4 V, en particulier 1,8 V.

9. Composite comprenant :
- une matrice de carbone mélangée à au moins un oxyhydroxysel ferreux ferrique de formule générale (I), (II), (III), (IV), (V) ou (VI) définie dans les revendications 1, 2, 3 et 4 respectivement, et,
dans laquelle Aⁿ⁻ est un anion de charge n, n prenant les valeurs 1, 2 ou 3, notamment 2, m est un nombre entier variant de 1 à 10, notamment de 1 à 4, avantageusement 3, et x est compris de 0 à 1, le rapport oxyhydroxysel ferreux ferrique /carbone (m/m) étant compris d'environ 0,1 à environ 100, préférentiellement d'environ 0,1 à environ 10, préférentiellement d'environ 1 à environ 10, et avantageusement de 8 à 10, et
- un liant, notamment :
de l'huile, le rapport oxyhydroxysel ferreux ferrique /huile (m/m) étant compris d'environ 1 à environ 10, et avantageusement d'environ 8 à environ 10,
ou de la paraffine, le rapport oxyhydroxysel ferreux ferrique /paraffine (m/m) étant compris d'environ 1 à environ 10, et avantageusement d'environ 8 à environ 10.

10. Composite selon la revendication 9, dans lequel Aⁿ⁻ représente CO₃²⁻.

11. Composite selon la revendication 9 ou 10, utilisé comme cathode ou anode d'un dispositif de stockage d'énergie en fonction du choix de la contre-électrode.

12. Dispositif de stockage d'énergie tel que pile, batterie, accumulateur ou supercapacité comprenant une cathode ou une anode constituée d'un composite selon la revendication 9 à 11.

13. Dispositif de stockage d'énergie tel que pile, batterie, accumulateur ou supercapacité selon la revendication 12, comprenant de plus un électrolyte, en particulier un acide tel que l'acide sulfurique ou l'acide chlorhydrique dans le cas du carbonate ou du sulfate.

14. Dispositif de stockage d'énergie tel qu'une pile, batterie, accumulateur ou surcapacité selon la revendication 12 ou 13, comprenant :
a. une anode constituée d'oxyhydroxysel ferreux ferrique dans lequel l'anion est divalent, et est notamment du sulfate ou du carbonate,
b. une cathode en fer métallique,
c. un électrolyte, notamment sous forme de gel ou de solution, à pH inférieur à 5, notamment à pH de 2 ou 3.

15. Procédé de fabrication d'un composite tel que défini dans l'une des revendications 9 à 11, comprenant les étapes suivantes :
a. Malaxage dans une matrice de carbone d'oxyhydroxysel ferreux ferrique de formule générale (I), (II), (III), (IV), (V) ou (VI) définie dans les revendications 1, 2, 3 et 4 respectivement, pour obtenir un mélange matrice-oxyhydroxysel ferreux ferrique,
b. Chauffage à une température comprise d'environ 30°C à 90°C, préférentiellement d'environ 45°C à 80°C, préférentiellement d'environ 60°C à 70°C en particulier 60°C dudit mélange avec de l'huile ou de la paraffine pour obtenir un composite.

## Patentansprüche

1. Verwendung eines Materials, umfassend mindestens eine Verbindung aus der Familie der schichtförmigen Eisen(II,III)-Doppelhydroxide (ferrous-ferric layered double hydroxide LDH), wobei die Verbindung mindestens ein zweiwertiges Kation D^{II} und mindestens ein dreiwertiges Kation T^{III} umfasst, mit der folgenden allgemeinen Formel:
[D^{II}₃ₙ₍₁₋ₓ₎T^{III}₃ₙₓO₆ₙHₙ₍₇₋₃ₓ₎]ⁿ⁺ [Aⁿ⁻, m H₂O]ⁿ⁻ (I)
worin Aⁿ⁻ ein Anion mit der Ladung n ist, n die Werte 1, 2 oder 3, insbesondere 2, annimmt, m eine ganze Zahl im Bereich von 1 bis 10, insbesondere im Bereich von 1 bis 4, vorteilhafterweise 3 ist, und x im Bereich von 0 bis 1 liegt,
wobei die Verbindung einen minimalen Anteil an Fe^{II} von 1 % umfasst, der die Umwandlung eines Fe^{II}-Ions in ein Fe^{III}-Ion ermöglicht,
für die Herstellung einer Elektrode in Energiespeichervorrichtungen, wie etwa Einweg-Batterien, Batterien, Akkumulatoren oder Superkondensatoren, wobei die theoretische Kapazität für elektrische Energie der Elektrode größer oder gleich 160 Ah/kg, insbesondere 245 Ah/kg ist.

2. Verwendung nach Anspruch 1 eines Materials, umfassend mindestens ein Eisen(II,III)-Oxidhydroxidsalz mit der folgenden allgemeinen Formel (II):
[Fe^{II}₃ₙ₍₁₋ₓ₎Fe^{III}₃ₙₓO₆ₙHₙ₍₇₋₃ₓ₎]ⁿ⁺ [Aⁿ⁻, m H₂O]ⁿ⁻ (II)
worin Aⁿ⁻ ein Anion mit der Ladung n ist, n die Werte 1, 2 oder 3, insbesondere 2, annimmt, m eine ganze Zahl im Bereich von 1 bis 10, insbesondere im Bereich von 1 bis 4, vorteilhafterweise 3 ist, und x im Bereich von 0 bis 1 liegt,
wobei das Eisen(II,III)-Oxidhydroxidsalz durch teilweise oder vollständige Substitution mindestens eines seiner Elemente modifiziert sein kann, zur Herstellung einer umweltverträglichen Elektrode.

3. Verwendung eines Materials nach einem der Ansprüche 1 bis 2, wobei Aⁿ⁻ für CO₃²⁻ steht, was zur folgenden Formel führt:
[Fe^{II}₆₍₁₋ₓ₎Fe^{III}₆ₓO₁₂H₂₍₇₋₃ₓ₎]²⁺ [CO₃²⁻, 3 H₂O]²⁻ (III)
worin x im Bereich von 0 bis 1 liegt.

4. Verwendung eines Materials nach einem der Ansprüche 1 bis 3, wobei die verfügbaren Protonen H⁺ der [OH⁻]-Gruppen teilweise oder vollständig durch einwertige Kationen, insbesondere Li⁺, substituiert sind, um im Fall von Carbonat zu einer Struktur mit der folgenden allgemeinen Formel (IV) zu führen, wobei die Protonen mit Lithium substituiert sind:
[Fe^{II}₆₍₁₋ₓ₎Fe^{III}₆ₓO₁₂H_{8+6(1-y)} Li¹_{6(y-x)}]²⁺ [CO₃²⁻, 3 H₂O]²⁻ (IV)
worin x im Bereich von 0 bis 1 liegt und 1 ≥ y ≥ x ist, und wahlweise:
das Fe^{II} teilweise durch zweiwertige Kationen, insbesondere Ni²⁺ und/oder Co²⁺, substituiert ist, um im Fall von Carbonat zu einer Struktur der folgenden allgemeinen Formel (V) zu führen, wobei das Fe^{II} durch Ni²⁺ substituiert ist und die Protonen H⁺ nicht substituiert sind:
[Fe^{II}_{6(1-y-x)}Ni^{II}_{6y} Fe^{III}₆ₓO₁₂H₂₍₇₋₃ₓ₎]²⁺ [CO₃²⁻, 3 H₂O]²⁻ (V)
worin x im Bereich von 0 bis 1 liegt und 0 < y ≤ 1-x ist, und/oder:
das Fe^{III} teilweise oder vollständig durch dreiwertige Kationen, insbesondere Al³⁺ und/oder Co³⁺, substituiert ist, um im Fall von Carbonat zu einer Struktur der folgenden allgemeinen Formel (VI) zu führen, wobei das Fe^{III} durch Al³⁺ substituiert ist und das Fe^{II} und/oder die Protonen H⁺ nicht substituiert sind:
[Fe^{II}₆₍₁₋ₓ₎Fe^{III}_{2(3x-z)}Al^{III} 2_{z}O₁₂ H₂₍₇₋₃ₓ₎]²⁺ [CO₃²⁻, 3 H₂O]²⁻ (VI)
worin x im Bereich von 0 bis 1 liegt, und 0 < z ≤ 3x ist.

5. Verwendung eines Materials nach einem der Ansprüche 1 bis 4, wobei das Material eine Kathode oder eine Anode bildet, die einer entsprechenden Gegenelektrode zugeordnet ist, die in der Energiespeichervorrichtung vorhanden ist, und die ein aktives Redoxpaar mit einer Potentialdifferenz von mehr als 1 Volt bezogen auf die Elektrode, die das Eisen(II,III)-Oxidhydroxidsalz enthält, aufweist.

6. Verwendung nach einem der Ansprüche 1 bis 5, wobei das Material in Form eines Verbundmaterials vorliegt und eine Kohlenstoffmatrix umfasst, die mit dem Eisen(II,III)-Oxidhydroxidsalz gemischt ist, wobei das Eisen(II,III)-Oxidhydroxidsalz/Kohlenstoff-Verhältnis (m/m) im Bereich von etwa 0,1 bis etwa 100, vorzugsweise von etwa 0,1 bis etwa 10, vorzugsweise von etwa 1 bis etwa 10, und vorteilhafterweise von 8 bis 10 liegt und ferner ein Bindemittel umfasst,
wie etwa Öl, wobei das Eisen(II,III)-Oxidhydroxidsalz/Öl-Verhältnis (m/m) im Bereich von etwa 1 bis etwa 10 und vorteilhafterweise von etwa 8 bis etwa 10 liegt, oder Paraffin, wobei das Eisen(II,III)-Oxidhydroxidsalz/Paraffin-Verhältnis (m/m) im Bereich von etwa 1 bis etwa 10 und vorteilhafterweise von etwa 8 bis etwa 10 liegt.

7. Verwendung nach einem der Ansprüche 1 bis 6, wobei die Zelle der Speichervorrichtung einen Elektrolyten umfasst, insbesondere eine Säure, wie etwa Schwefelsäure oder Salzsäure im Fall von Carbonat oder Sulfat.

8. Verwendung nach Anspruch 7, wobei die Potentialdifferenz (ddp) der Zelle der Speichervorrichtung im Bereich von etwa 1 V bis etwa 4 V, vorzugsweise von etwa 3 V bis etwa 4 V, insbesondere 1,8 V liegt.

9. Verbundmaterial, umfassend:
- eine Kohlenstoffmatrix, die mit mindestens einem Eisen(II,III)-Oxidhydroxidsalz mit der allgemeinen Formel (I), (II), (III), (IV), (V) oder (VI) gemischt ist, definiert in den Ansprüchen 1, 2, 3 bzw. 4, und
worin Aⁿ⁻ ein Anion mit der Ladung n ist, n die Werte 1, 2 oder 3, insbesondere 2, annimmt, m eine ganze Zahl im Bereich von 1 bis 10, insbesondere im Bereich von 1 bis 4, vorteilhafterweise 3 ist, und x im Bereich von 0 bis 1 liegt, wobei das Eisen(II,III)-Oxidhydroxidsalz/Kohlenstoff-Verhältnis (m/m) im Bereich von etwa 0,1 bis etwa 100, vorzugsweise von etwa 0,1 bis etwa 10, vorzugsweise von etwa 1 bis etwa 10, und vorteilhafterweise von 8 bis 10 liegt und
- ein Bindemittel umfasst, insbesondere:
Öl, wobei das Eisen(II,III)-Oxidhydroxidsalz/Öl-Verhältnis (m/m) im Bereich von etwa 1 bis etwa 10 und vorteilhafterweise von etwa 8 bis etwa 10 liegt,
oder Paraffin, wobei das Eisen(II,III)-Oxidhydroxidsalz/Paraffin-Verhältnis (m/m) im Bereich von etwa 1 bis etwa 10 und vorteilhafterweise von etwa 8 bis etwa 10 liegt.

10. Verbundmaterial nach Anspruch 9, wobei Aⁿ⁻ für CO₃²⁻ steht.

11. Verbundmaterial nach Anspruch 9 oder 10, das, abhängig von der Wahl der Gegenelektrode, als Kathode oder Anode einer Energiespeichervorrichtung verwendet wird.

12. Energiespeichervorrichtung, wie etwa eine Einweg-Batterie, eine Batterie, ein Akkumulator oder ein Superkondensator, umfassend eine Kathode oder eine Anode, die aus einem Verbundmaterial nach Anspruch 9 bis 11 gebildet ist.

13. Energiespeichervorrichtung, wie etwa eine Einweg-Batterie, eine Batterie, ein Akkumulator oder ein Superkondensator nach Anspruch 12, umfassend ferner einen Elektrolyten, insbesondere eine Säure, wie etwa Schwefelsäure oder Salzsäure, im Fall von Carbonat oder Sulfat.

14. Energiespeichervorrichtung, wie etwa eine Einweg-Batterie, eine Batterie, ein Akkumulator oder ein Superkondensator nach Anspruch 12 oder 13, umfassend:
a. eine Anode, die aus Eisen(II,III)-Oxidhydroxidsalz besteht, wobei das Anion zweiwertig ist und insbesondere Sulfat oder Carbonat ist,
b. eine Kathode aus Metalleisen,
c. einen Elektrolyten, insbesondere in Form von Gel oder Lösung, mit einem pH-Wert von weniger als 5, insbesondere mit einem pH-Wert von 2 oder 3.

15. Verfahren zum Herstellen eines Verbundmaterials nach einem der Ansprüche 9 bis 11, das die folgenden Schritte umfasst:
a. Einmischen in eine Kohlenstoffmatrix von Eisen(II,III)-Oxidhydroxidsalz mit der allgemeinen Formel (I), (II), (III), (IV), (V) oder (VI), definiert in den Ansprüchen 1, 2, 3 bzw. 4, um eine Eisen(II,III)-Oxidhydroxidsalz-Matrix-Mischung zu erhalten,
b. Erhitzen auf eine Temperatur im Bereich von etwa 30 °C bis 90 °C, vorzugsweise von etwa 45 °C bis 80 °C, vorzugsweise von etwa 60 °C bis 70 °C, insbesondere 60 °C der Mischung mit Öl oder Paraffin, um ein Verbundmaterial zu erhalten.

## Claims

1. Use of a material comprising at least one compound related to a ferrous-ferric lamellar double hydroxide (LDH), said compound having at least one divalent cation D^{II}, and at least one trivalent cation T^{III}, of the following general formula:
[D^{II}₃ₙ₍₁₋ₓ₎T^{III}₃ₙₓO₆ₙHₙ₍₇₋₃ₓ₎]ⁿ⁺ [Aⁿ⁻, m H₂O]ⁿ⁻ (I)
in which Aⁿ⁻ is an anion of charge n, n having the values 1, 2 or 3, in particular 2, m is an integer in the range from 1 to 10, in particular from 1 to 4, advantageously 3,
and x is comprised from 0 to 1,
said compound comprising a minimum proportion of Fe^{II} of 1% permitting the transformation of an Fe^{II} ion into Fe^{III},
for implementing an electrode in energy storage devices such as electric cells, batteries, accumulators or supercapacitors, the theoretical electrical energy capacity of said electrode is greater than or equal to 160 Ah/kg, in particular 245 Ah/kg.

2. Use according to claim 1, of a material comprising at least one ferrous-ferric oxyhydroxy salt of the following general formula (II):
[Fe^{II}₃ₙ₍₁₋ₓ₎Fe^{III}₃ₙₓO₆ₙHₙ₍₇₋₃ₓ₎]ⁿ⁺ [Aⁿ⁻, m H₂O]ⁿ⁻ (II)
in which Aⁿ⁻ is an anion of charge n, n having the values 1, 2 or 3, in particular 2, m is an integer in the range from 1 to 10, in particular from 1 to 4, advantageously 3, and x is comprised from 0 to 1,
said ferrous-ferric oxyhydroxy salt can be modified partially by the partial or complete substitution of at least one of its elements, for implementing a non-polluting electrode.

3. Use of a material according to any one of claims 1 to 2, wherein Aⁿ⁻ represents CO₃²⁻ leading to the following formula:
[Fe^{II}₆₍₁₋ₓ₎Fe^{III}₆ₓO₁₂H₂₍₇₋₃ₓ₎]²⁺ [CO₃²⁻, 3 H₂O]²⁻ (III)
in which x is comprised from 0 to 1.

4. Use of a material according to any one of claims 1 to 3, wherein the available protons H⁺ of the OH⁻ groups are partially or totally substituted by monovalent cations, in particular Li⁺ to give a structure of the following general formula (IV) in the case of the carbonate in which the protons are substituted by lithium:
[Fe^{II}₆₍₁₋ₓ₎Fe^{III}₆ₓO₁₂H_{8+6(1-y)} Li^{I}_{6(y-x})]²⁺ [CO₃²⁻, 3 H₂O]²⁻ (IV)
in which x is comprised from 0 to 1 and 1≥y ≥ x, and
optionally:
Fe^{II} is partially substituted by divalent cations, in particular Ni²⁺ and/or Co²⁺ to give a structure of the following general formula (V) in the case of the carbonate in which Fe^{II} is substituted by Ni²⁺ and the protons H⁺ are not substituted:
[Fe^{II}_{6 (1-y-x)}Ni^{II}_{6y} Fe^{III}₆ₓO₁₂ H₂₍₇₋₃ₓ₎]²⁺ [CO₃²⁻, 3 H₂O]²⁻ (V)
in which x is comprised from 0 to 1 and 0 < y ≤ 1-x, and/or
Fe^{III} is partially or completely substituted by trivalent cations, in particular Al³⁺ and/or Co³⁺ to give a structure of the following general formula (VI) in the case of the carbonate in which Fe^{III} is substituted by Al³⁺, and Fe^{II} and/or the protons H⁺ are not substituted:
[Fe^{II}_{6 (1-x)}Fe^{III}_{2(3x-z)}Al^{III}_{2z}O₁₂ H₂₍₇₋₃ₓ₎]²⁺ [CO₃²⁻, 3 H₂O]²⁻ (VI)
in which x is from 0 to 1 and 0 < z ≤ 3x.

5. Use of a material according to any one of claims 1 to 4, wherein said material constitutes a cathode or an anode, associated with a corresponding counter-electrode present in said energy storage device, and that possesses an active redox couple having a potential difference greater than 1 V relative to the electrode containing said ferrous-ferric oxyhydroxy salt.

6. Use according to any one of claims 1 to 5, in which said material is in the form of a composite and comprises a carbon matrix mixed with the ferrous-ferric oxyhydroxy salt, the ferrous-ferric oxyhydroxy salt/carbon ratio (w/w) being comprised from about 0.1 to about 100, preferably from about 0.1 to about 10, preferably from about 1 to about 10, and advantageously from 8 to 10, and in addition comprises a binder,
such as oil, the ferrous-ferric oxyhydroxy salt/oil ratio (w/w) being comprised from about 1 to about 10, and advantageously from about 8 to about 10, or, paraffin, the ferrous-ferric oxyhydroxy salt/paraffin ratio (w/w) being comprised from about 1 to about 10, and advantageously from about 8 to about 10.

7. Use according to any one of claims 1 to 6, wherein the cell of said storage device comprises an electrolyte, in particular an acid such as sulphuric acid or hydrochloric acid in the case of the carbonate or the sulphate.

8. Use according to claim 7, wherein the potential difference (PD) of said cell of said storage device is comprised from about 1 V to about 4 V, preferably from about 3 V to about 4 V, in particular 1.8 V.

9. Composite comprising:
- a carbon matrix mixed with at least one ferrous-ferric oxyhydroxy salt of general formula (I), (II), (III), (IV), (V) or (VI) defined in claims 1, 2, 3 and 4 respectively, and,
in which Aⁿ⁻ is an anion of charge n, n having the values 1, 2 or 3, in particular 2, m is an integer in the range from 1 to 10, in particular from 1 to 4, advantageously 3, and x is comprised from 0 to 1, the ferrous-ferric oxyhydroxy salt/carbon ratio (w/w) being comprised from about 0.1 to about 100, preferably from about 0.1 to about 10, preferably from about 1 to about 10, and advantageously from 8 to 10, and
- a binder, in particular:
an oil, the ferrous-ferric oxyhydroxy salt/oil ratio (w/w) being comprised from about 1 to about 10, and advantageously from about 8 to about 10,
or paraffin, the ferrous-ferric oxyhydroxy salt/paraffin ratio (w/w) being comprised from about 1 to about 10, and advantageously from about 8 to about 10.

10. Composite according to claim 9, wherein Aⁿ⁻ represents CO₃²⁻.

11. Composite according to claim 9 or 10, used as the cathode or the anode of an energy storage device depending on the choice of counter-electrode.

12. Energy storage device such as a cell, battery, accumulator or supercapacitor comprising a cathode or an anode constituted by a composite according to any one of claims 9 to 11.

13. Energy storage device such as a cell, battery, accumulator or supercapacitor according to claim 12, further comprising an electrolyte, in particular an acid such as sulphuric acid or hydrochloric acid in the case of the carbonate or the sulphate.

14. Energy storage device such as a cell, battery, accumulator or supercapacitor according to claim 12 or 13, comprising:
a. an anode constituted by ferrous-ferric oxyhydroxy salt in which the anion is divalent, and is in particular sulphate or carbonate,
b. a cathode of metallic iron,
c. an electrolyte, in particular in the form of gel or of solution, at a pH below 5, in particular at a pH of 2 or 3.

15. Method of manufacture of a composite as defined in any one of claims 9 to 11, comprising the following steps:
a. Mixing ferrous-ferric oxyhydroxy salt of general formula (I), (II), (III), (IV), (V) or (VI) defined in claims 1, 2, 3 and 4 respectively in a carbon matrix, to obtain a matrix-ferrous-ferric oxyhydroxy salt mixture,
b. Heating of said mixture at a temperature comprised from about 30°C to 90°C, preferably from about 45°C to 80°C, preferably from about 60°C to 70°C, in particular 60°C, of said mixture with an oil or paraffin, to obtain a composite.
